# EUROPEAN PATENT APPLICATION

(11) **EP 4 023 072 A1**
(43) Date of publication of application: **06.07.2022**
(21) Application number: 20859256.8
(22) Date of filing: 28.08.2020
(51) Int. Cl.: A23G 1/02

(54) **ROASTED CACAO BEANS AND METHOD FOR ROASTING RAW CACAO BEANS**

(30) Priority: 30.08.2019 JP 2019158345
(71) Applicant: Microwave Chemical Co., Ltd., Osaka-shi, Osaka 559-0025 (JP); Dari K Co., Ltd., Kyoto-shi, Kyoto 603-8205 (JP)
(72) Inventor: KAIHARA, Kanako, Osaka-shi, Osaka 559-0025 (JP); YOSHINO, Keiichi, Kyoto-shi, Kyoto 603-8205 (JP); SHIMIZU, Toshiki, Tokyo 1070062 (JP)
(74) Representative: Müller-Boré & Partner Patentanwälte PartG mbB
(86) International application number: PCT/JP2020/032647
(87) International publication number: WO 2021/039974

(57) **Abstract**

Provided are roasted cacao beans with high total polyphenol content and reduced bitterness and the like, and a method for roasting raw cacao beans. Roasted cacao beans are obtained by roasting raw cacao beans in a state in which the pressure has been reduced below atmospheric pressure by heating for a prescribed period using microwaves so that the bean surface temperature reaches a temperature in the range of 50-90°C. The microwave heating time is preferably in the range of five to ten minutes.

## Description

### TECHNICAL FIELD

The present invention relates to roasted cacao beans and a method for roasting raw cacao beans.

### BACKGROUND ART

Cacao beans that are seeds of cacao fruits are generally fermented after harvesting and dried by natural drying or the like to obtain raw cacao beans, and then the raw cacao beans are roasted. The roasted cacao beans are crushed, for example, into cacao mass, and the cacao mass is used as raw materials for chocolate, cocoa beverages, and the like. Examples of a method for roasting raw cacao beans include a method described in Patent Document 1. In the method described in Patent Document 1, raw cacao beans are heated for 30 minutes at 130°C with hot air so as to obtain roasted cacao beans. Furthermore, in the method described in Patent Document 1, in order to reduce bitterness and the like, the hulls of the raw cacao beans are removed before roasting and the raw cacao beans whose hulls have been removed are subjected to an alkali treatment.

### PRIOR ART DOCUMENT

### PATENT DOCUMENT

Patent Document 1: Japanese Patent Laid-open Publication No. H11-318338

### SUMMARY OF THE INVENTION

### PROBLEMS TO BE SOLVED BY THE INVENTION

Cacao beans contain a large amount of polyphenol having an antioxidant action and the like that are useful for human bodies. However, in the method described in Patent Document 1, a problem arises in that the total polyphenol content in the cacao beans is considerably decreased by heating cacao beans at a high temperature of 130°C as one of main causes. Therefore, for example, it is conceivable to lower the temperature of heating with hot air, but this time, problems arise in that the inside of cacao beans cannot be sufficiently heated so as to cause the insufficiency of roasting or a long time for roasting is required. In addition, in the method described in Patent Document 1, in the first place, it is assumed that bitterness and the like occur in a roasting process unless a pre-treatment of removing the hulls of raw cacao beans and subjecting the raw cacao beans to an alkali treatment is performed before roasting, and problems arise in that not only the pre-treatment is complicated, but also the treatment is a chemical treatment different from general food processing, which is not necessarily preferred for consumers.

A problem to be solved of the present invention is to provide roasted cacao beans having a large total polyphenol content and reduced bitterness and the like, and a method for roasting cacao beans.

### MEANS FOR SOLVING THE PROBLEM

Roasted cacao beans according of an aspect of the present invention are obtained by roasting raw cacao beans by heating for a predetermined time with microwaves in a state where a pressure has been reduced below a normal pressure such that a surface temperature thereof reaches a temperature within a range of 50°C to 90°C.

A method for roasting cacao beans according to another aspect of the present invention includes roasting raw cacao beans by heating for a predetermined time with microwaves in a state where a pressure has been reduced below a normal pressure such that a surface temperature thereof is in a range of 50°C to 90°C.

### ADVANTAGES OF THE INVENTION

According to the present invention, the total polyphenol content is larger than that in a conventional roasting method so that roasted cacao beans with reduced bitterness and the like can be obtained. It is possible to obtain roasted cacao beans without increasing treatment steps.

### BRIEF DESCRIPTION OF THE DRAWINGS

Fig. 1 is a schematic diagram illustrating a configuration example of a roasting device that is used in a method for roasting raw cacao beans according to an embodiment.
Fig. 2 is a graph showing changes over time in a roasting temperature and a microwave output in Example 1.
Fig. 3 is a graph showing changes over time in an internal temperature and a surface temperature of raw cacao beans to be microwave-heated.

### EMBODIMENTS OF THE INVENTION

Hereinafter, preferred embodiments according to the present invention will be described with reference to the accompanying drawings. Note that, dimensions and scales of respective parts in the drawings are appropriately different from actual ones, and some parts are schematically illustrated for easy understanding. The scope of the present invention is not limited to these embodiments as long as there is no description to particularly limit the present invention in the following description.

### 1. Roasted cacao beans

Roasted cacao beans are cacao beans roasted by heating raw cacao beans. "Raw cacao beans" are cacao beans in a state where cacao beans that are seeds of harvested cacao fruits are fermented and then dried by solar drying or the like. Further, the "raw cacao beans" are in a state where nibs that are endosperm part are covered with hulls and the hulls are in close contact with the nibs. On the other hand, "roasted cacao beans" are in a state where the water content is smaller than that in the raw cacao beans, and gaps between hulls and nibs are generated. In general, in the raw cacao beans, it is difficult to peel the hulls from the nibs even when an external force in a crushing direction is applied to the raw cacao beans, but in the roasted cacao beans, it is possible to easily peel the hulls from the nibs when the external force in the crushing direction is applied to the roasted cacao beans. Sensory evaluation and determination on whether or not the cacao beans have been roasted are generally conducted from this difference and the expression state of a flavor component described below

Hereinafter, when the raw cacao beans and the roasted cacao beans are not particularly distinguished, the raw cacao beans and the roasted cacao beans are also collectively referred to simply as "cacao beans" or "beans".

In the present invention, roasted cacao beans are obtained by heating raw cacao beans for a predetermined time with microwaves in a state where a pressure has been reduced below a normal pressure such that a surface temperature thereof is in a range of 50°C to 90°C. The expression "heating with microwaves" indicates that an object to be heated is physically activated by irradiation with microwaves to generate heat. Since heating with microwaves is performed by heat generation of raw cacao beans themselves, which are an object to be heated, heating with microwaves can be performed more quickly than heat transfer heating such as hot air heating. Moreover, when raw cacao beans are heated in a state where a pressure has been reduced below a normal pressure, the time required for roasting the raw cacao beans can be shortened as compared with the case of heating the raw cacao beans at a normal pressure. Moreover, by setting the heating temperature within a range of 50°C to 90°C, it is possible to reduce the decomposition of polyphenol in the raw cacao beans or to suitably generate a flavor component in the roasted cacao beans while preventing the insufficiency of roasting. Therefore, the total polyphenol content in the roasted cacao beans of the present invention is larger than that in conventional roasted cacao beans which have been roasted using heat transfer heating, and bitterness and the like are reduced. The term "normal pressure" in the present specification refers to an atmospheric pressure in a range of a normal atmospheric pressure change depending on altitude and other environments on the basis of a standard atmospheric pressure (101.325 kPa), and refers to an atmospheric pressure at which an atmospheric pressure operation such as active decompression is not performed. Hereinafter, the raw cacao beans and the roasted cacao beans will be briefly described.

The water content in the raw cacao beans is not particularly limited, and is, for example, within a range of 5 mass% to 8 mass%, and preferably within a range of 6 mass% to 7 mass%. The variety, production area, or the like of cacao beans is not particularly limited.

The total polyphenol content in the raw cacao beans is not particularly limited, and is, for example, within a range of 3.0 mass% to 5.0 mass%. The total polyphenol content is measured in accordance with a Folin Ciocalteu method. The "Folin Ciocalteu method" is a method utilizing the fact that a Folin reagent (Folin Ciocalteu, phenol reagent) is reduced by a phenolic hydroxyl group to give a blue color. In this method, the absorbance at 765 nm is measured and quantified using polyphenol such as gallic acid or chlorogenic acid as an equivalent. Note that, all of the terms "total polyphenol content" described below are based on the amount measured in accordance with a Folin Ciocalteu method. The "total polyphenol content" described below is preferably a value obtained by subtracting the water amount in the beans.

Here, the "total polyphenol" in the cacao beans refers to polyphenol (also referred to as polyphenols) contained in the cacao beans. Typical examples of the polyphenol include catechin, epicatechin, chlorogenic acid, gallic acid, and protocatechuic acid which are described below, and polymers (dimers, trimers, tetramers, polymers, or the like) obtained by combining one or more kinds thereof.

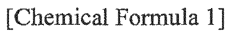

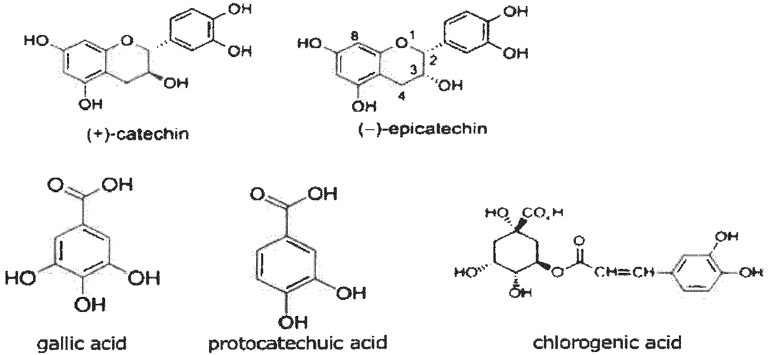

The water content in the roasted cacao beans is not particularly limited, is smaller than the water content in the raw cacao beans, and is, for example, within a range of 3.0 mass% to 6.0 mass%, preferably within a range of 4.5 mass% to 6.0 mass%, more preferably within a range of 5.0 mass% to 5.5 mass%.

As described above, in the case of obtaining roasted cacao beans by heating raw cacao beans for a predetermined time with microwaves in a state where a pressure has been reduced below a normal pressure such that a surface temperature thereof is in a range of 50°C to 90°C, the total polyphenol content in the roasted cacao beans can be set to equal to the total polyphenol content in the raw cacao beans. In this case, when a total polyphenol content in the raw cacao beans is designated as A [mass%] and a total polyphenol content in roasted cacao beans is designated as B [mass%], (A - B) is 0.5 mass% or less. In this case, the total polyphenol content in the roasted cacao beans is specifically 3.0 mass% or more, and more specifically 3.0 mass% to 4.0 mass%.

On the other hand, in the case of obtaining roasted cacao beans by conventional heat transfer heating, generally, the total polyphenol content in the roasted cacao beans is 2.5 mass% or less, which is considerably smaller than the total polyphenol content in the raw cacao beans described above.

As described above, the total polyphenol content in the roasted cacao beans of the present invention is larger than that in the roasted cacao beans which have been roasted by conventional heat transfer heating. The reason for this is speculated that the decomposition of polyphenol by roasting is further reduced as compared with the conventional case.

Bitterness and the like are reduced in the roasted cacao beans of the present invention than in the cacao beans which have been roasted by conventional heat transfer heating. The reason for this is speculated that the generation of the flavor component attributable to the Maillard reaction in the cacao beans is promoted by dehydration under the reduced pressure conditions as compared with the conventional case; on the other hand, the generation of the final product, melanoidin, of the Maillard reaction, which is one of bitter components, is suppressed by low temperatures.

The "Maillard reaction" is a multi-stage reaction observed when a reducing sugar and an amino compound (amino acid, peptide, and protein) are heated, and is a reaction that finally generates a brown substance (melanoidin). The flavor component of the cacao beans is expressed as an intermediate of the Maillard reaction. Examples thereof include a reaction product of a reducing sugar of sucrose and phenylalanine, and a reaction product of a reducing sugar of glucose and valine, leucine, threonine, or glutamine.

### 2. Method for roasting raw cacao beans

In the method for roasting raw cacao beans of the present invention, specifically, first, raw cacao beans are prepared, the raw cacao beans are then accommodated in a container whose pressure can be reduced, the pressure in the container is reduced thereafter, the raw cacao beans are heated by irradiating the raw cacao beans with microwaves so that the surface temperature thereof is within a range of 50°C to 90°C, and the irradiation energy of microwaves is power-controlled so as to maintain the temperature for a predetermined time. Hereinafter, an example of a roasting device that is used in the roasting method will be described.

### 2-1. Roasting device

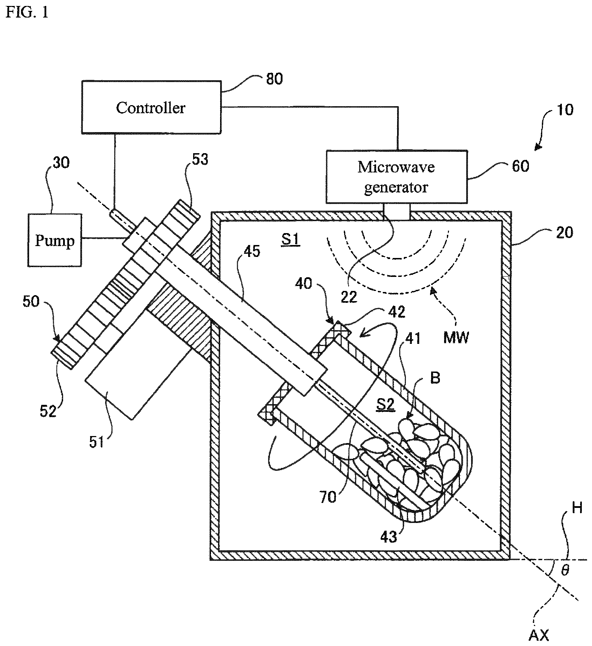

Fig. 1 is a schematic diagram illustrating a configuration example of a roasting device 10 that is used in a method for roasting raw cacao beans. The roasting device 10 is to roast a plurality of raw cacao beans B by microwave heating while stirring under reduced pressure. The roasting device 10 includes a chamber 20, a pump 30, a container 40, a drive mechanism 50, a microwave generator 60, a temperature sensor 70, and a controller 80. Hereinafter, each part of the roasting device 10 will be sequentially briefly described.

The chamber 20 is a container that has reflectivity to microwaves (MW) and forms a space S1 so as not to leak microwaves (MW). For example, the chamber 20 is made of a non-magnetic metal material such as stainless steel, aluminum, or copper. The chamber 20 is provided with a microwave introduction hole 22 for introducing microwaves (MW) into the space S1. The shape, size, or the like of the chamber 20 is arbitrary.

The container 40 is disposed in the space S1 of the chamber 20 and accommodates the plurality of raw cacao beans B. The container 40 illustrated in Fig. 1 has a container main body 41 and a lid body 42. The container main body 41 is a bottomed cylindrical member having a space S2 for accommodating the plurality of raw cacao beans B. The container main body 41 is made of a material that can transmit microwaves (MW), for example, a glass material, a resin material, or the like. The lid body 42 blocks an opening opposite to the bottom portion of the container main body 41. The lid body 42 is made of, for example, a material that can transmit microwaves (MW), similarly to the container main body 41. One end of a tubular support 45 is fixed to the lid body 42 in a state of being opened to the space S2 in order to rotatably support the container 40 around a central axis AX. The other end of the support 45 extends to the outside of the chamber 20, is rotatably supported, and is connected to the drive mechanism 50. The support 45 is also made of, for example, a material that can transmit microwaves MW, similarly to the container main body 41. The container main body 41 of the embodiment is provided with a rod-shaped protrusion 43 protruding to the space S2 at a position deviated from the central axis AX.

The pump 30 is a decompression pump that is connected to the other end of the tubular support 45 and decompresses the space S2 in the container 40. The type, capacity, or the like of the pump 30 is not particularly limited as long as it can realize a necessary decompressed state. The necessary decompressed state will be described below.

In the container 40 described above, by rotating the container main body 41 about the central axis AX, the plurality of raw cacao beans B in the container main body 41 are stirred. At this time, the stirring is promoted by the protrusion 43 described above. The central axis AX is inclined at an inclination angle θ with respect to a horizontal plane H. Due to this inclination, the stirring described above is efficiently performed as compared with a case where the central axis AX is parallel or orthogonal to the horizontal plane H. The specific inclination angle θ is particularly limited, and is, for example, within a range of 10° to 80°.

The configuration of the container 40 is not limited to the configuration illustrated in Fig. 1. For example, a configuration in which the bottom portion of the container main body 41 is rotatably supported around the central axis AX may be employed. In this case, one or both of the lid body 42 and the support 45 may be omitted. The shape, size, or the like of the container main body 41 is also arbitrary. The shape of the protrusion 43 is not limited to a rod shape, and may be, for example, a fin shape. The number of protrusions 43 may be plural. A configuration in which the cacao beans are stirred by the unevenness of the container instead of the protrusion 43 may be employed, and the protrusion 43 may be omitted as long as the stirring is suitably performed only by the rotation.

The drive mechanism 50 rotates the container 40 about the central axis AX. The drive mechanism 50 illustrated in Fig. 1 has a motor 51 and gears 52 and 53. The motor 51 is not particularly limited, and is, for example, various DC motors or various AC motors. The gears 52 are attached to a rotation shaft of the motor 51. The gears 53 are meshed with the gears 52 and attached to the support 45 described above. The drive mechanism 50 described above transmits the driving force of the motor 51 to the support 45 via the gears 52 and 53 so as to rotate the container 40 about the central axis AX. The configuration of the drive mechanism 50 is determined depending on the form or the like of the container 40 and any configuration is employed without limitation to the configuration illustrated in Fig. 1. For example, the driving force of the motor 51 may be transmitted to the support 45 via a mechanism other than the gears, such as a belt. The speed at which the drive mechanism 50 rotates the container 40 about the central axis AX is determined depending on the scale or the like of the container 40, and is not particularly limited.

The microwave generator 60 is connected to the microwave introduction hole 22 of the chamber 20 and heats the raw cacao beans B by irradiating the raw cacao beans B with microwaves (MW). For example, the microwave generator 60 is a magnetron, a klystron, a gyrotron, a semiconductor oscillator, or the like. The frequency of the microwaves (MW) is not particularly limited, and is, for example, 915 MHz or 2.45 GHz. The output of microwaves (MW) is determined according to the scale of the roasting device 10, or the like, and is not particularly limited.

The temperature sensor 70 detects the temperature of the plurality of raw cacao beans B in the container 40. For example, the temperature sensor 70 is a temperature measuring instrument such as an optical fiber type, a radiation thermometer type, or a thermocouple type.

The controller 80 controls the output of the microwave generator 60 on the basis of the detection result of the temperature sensor 70. For example, the controller 80 is a computer device including a processor such as a central processing unit (CPU) and a memory such as a semiconductor memory. More specifically, the controller 80 controls the output of the microwave generator 60 by executing the control program stored in the memory by the processor so that a temperature detected by the temperature sensor 70 reaches a target temperature (a roasting temperature described below).

In the roasting device 10 with the following configuration, first, the plurality of raw cacao beans B are accommodated in the space S2 of the container 40. Next, by operating the pump 30, the pressure of the space S2 in the container 40 is reduced to less than 30 kPa, for example, 23 to 27 kPa. The raw cacao beans B are heated by irradiating each of the raw cacao beans B with microwaves (MW) from the microwave generator 60 while maintaining this decompressed state. At this time, the controller 80 controls the output of the microwave generator 60 on the basis of the temperature detected by the temperature sensor 70 so that the temperature of each of the raw cacao beans B is maintained within a range of 50°C to 90°C. As this time, the container 40 is rotated about the central axis AX by the operation of the drive mechanism 50 so as to stir the whole raw cacao beans B. The whole raw cacao beans B are heated in this way and roasted to obtain roasted cacao beans, and then the roasted cacao beans are taken out from the container 40.

The above description has been given for the roasting device 10. The configuration of the roasting device 10 is not limited to the above-described configuration as long as roasting conditions described below can be realized. For example, although the roasting device 10 described above is configured to roast the plurality of raw cacao beans B on a small scale by a batch method, in the method for roasting cacao beans of the present invention, for example, the raw cacao beans B may be roasted by a method in which the raw cacao beans B are put in a rotatable drum-shaped container such as a general roasting machine for usual heating, which transmits microwaves (MW), and the raw cacao beans B are irradiated with the microwaves (MW) from the outside of the container while the pressure in the container is reduced, or a method in which a container, for example, a cylindrical decompressed container containing the raw cacao beans B is allowed to continuously pass through the inside of the chamber. The method for roasting cocoa beans of the present invention may use, for example, a known microwave (MW) heating device or a device using the same.

### 2-2. Roasting conditions

The roasting temperature of the raw cacao beans B, that is, the heating temperature of the raw cacao beans B by microwaves (MW) may be within a range of 50°C to 90°C and preferably within a range of 70°C to 90°C and further preferably within a range of 70°C to 80°C. When the heating temperature is equal to or lower than the upper limit in this range, the decomposition of polyphenol in the cacao beans can be reduced. Here, when the roasting temperature is lower than the lower limit in the above range, the insufficiency of roasting occurs even under reduced pressure conditions described below. On the other hand, when the upper limit of the above range is exceeded, polyphenol in the cacao beans is likely to be decomposed even under the following reduced pressure conditions, and as a result, the total polyphenol content in the roasted cacao beans tends to significantly decrease, and at the same time, a bitter component that is not preferable for the roasted cacao beans increases.

Here, the heating temperature is a temperature at the surfaces of the cacao beans. It is confirmed by the experiment of the present inventors that the internal temperature of the cacao beans is almost equal to the temperature at the surface of the cacao beans although there is a slight time lag with respect to a change in the temperature at the surface of the cacao beans during heating with microwaves (MW). The heating temperature is preferably maintained within the above range over the entire range of the roasting time, but may be temporarily out of the above range as long as it does not adversely affect the characteristics of the roasted cacao beans.

The atmospheric pressure of the raw cacao beans B during roasting, that is, the pressure in the space S2 is actively lowered from a normal pressure (approximately 101 kPa), and is, for example, preferably in a range of 1 kPa to 50 kPa and more preferably in a range of 10 kPa to 30 kPa. When the pressure is within this range, there is an advantage that roasting proceeds without exhibiting bitterness and the like of the roasted cacao beans. On the other hand, when the pressure is higher than the above range, depending on the filling state or the like of the raw cacao beans B in the container 40, some of the plurality of raw cacao beans B are likely to be insufficiently roasted. On the other hand, when the pressure is too low, not only further improvement in the above advantage cannot be expected, but also there is a disadvantage such as an increase in cost of equipment.

The roasting time of the raw cacao beans B, that is, the heating time by heating using microwaves (MW) depends on the temperature of the cacao beans and the pressure in the container which are dependent on the microwave output, but is preferably within a range of 5 minutes to 10 minutes and more preferably within a range of 5 minutes to 7.5 minutes. When the heating time is within this range, it is easy to attain both of good roasting state and reduction of bitterness and the like in the roasted cacao beans. On the other hand, when the heating time is too short, depending on the microwave (MW) output or the like, there is a tendency that the insufficiency of roasting is likely to occur. On the other hand, when the heating time is too long, depending on the microwave (MW) output or the like, there is a tendency that scorching, carbonization, or the like is likely to occur due to excessive roasting, or bitterness and the like of the roasted cacao beans is increased.

Here, the heating time is a length of time during which the temperature of the raw cacao beans B is maintained at the above-described heating temperature. Therefore, the length of time before the temperature of the raw cacao beans B reaches the above-described heating temperature is not included in the heating time. However, from the viewpoint of improving the efficiency of roasting and reducing the unintentional influence of heat on the raw cacao beans B (a decrease in the total polyphenol amount, expression of the bitter component, or the like), the length of time during which the temperature of the raw cacao beans B reaches the above-described heating temperature (target temperature) from ordinary temperature is preferably 4 minutes or longer. From the same viewpoint, the temperature increase rate until the temperature of the raw cacao beans B reaches the above-described heating temperature (target temperature) is preferably 10°C/min to 50°C/min and more preferably 15°C/min to 30°C/min.

Hereinbefore, the roasted cacao beans and the method for roasting cacao beans of the present invention have been described on the basis of embodiments illustrated in the drawings; however, the present invention is not limited thereto.

### EXAMPLES

Hereinafter, specific examples of the present invention will be described. Note that, the present invention is not limited to the following examples.

### 1. Roasting

### 1-1. Raw cacao beans

First, raw cacao beans were prepared. The water content of the prepared raw cacao beans was 7.10 mass% (7.10 g per 100 g of the raw cacao beans). The total polyphenol content of the prepared raw cacao beans was 3.45 mass% (3.45 g per 100 g of the raw cacao beans). Note that, in each of Examples, Reference Examples, and Comparative Examples described below, the same lot of raw cacao beans having the aforementioned water content and total polyphenol content was used. When the total polyphenol content of the raw cacao beans was obtained by subtracting the water amount in the raw cacao beans, the total polyphenol content was 3.71 mass% (3.71 g per 100 g of the raw cacao beans from which water had been removed).

### 1-2. Roasting conditions

### (Example 1)

Next, the prepared raw cacao beans were roasted by microwave heating under the following roasting conditions. The same device as the roasting device 10 described above was used in this roasting.
Microwave output: 0 to 700 W
Microwave frequency: 2.45 GHz
Roasting temperature: 80°C
Temperature increase rate: 18 to 21°C
Roasting time: 7.5 minutes
Atmospheric pressure: 25 to 30 kPa

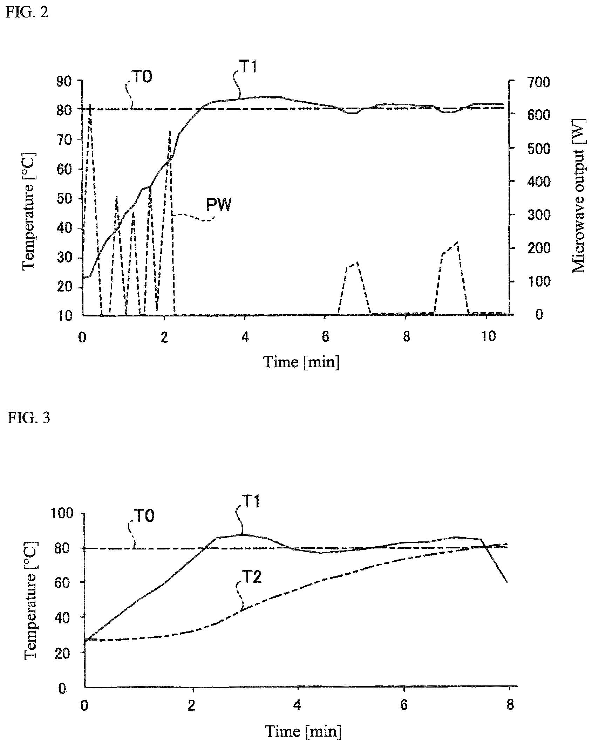

An optical fiber type thermometer was used as the temperature sensor. The microwave output was subjected to proportional-integral-differential (PID) control so that the measured temperature reached the target roasting temperature. The temperature at the bean surface before heating is ordinary temperature (25°C). The roasting time is a length of time during which the target roasting time is maintained from a time point at which the measured temperature reaches the target roasting temperature as a starting point. Changes over time in a roasting temperature T1 and a microwave output PW in Example 1 are shown in Fig. 2. In Fig. 2, a target roasting temperature is indicated by a dashed-dotted line as a target temperature T0, the measured temperature is indicated by a solid line as a roasting temperature T1, and the microwave output PW is indicated by a dashed line.

### (Example 2)

Raw cacao beans were roasted in the same manner as in Example 1 described above, except that the roasting time was set to 5 minutes. Changes over time in the internal temperature and the surface temperature of the raw cacao beans to be microwave-heated were measured by means of another experiment. Results thereof are presented in Fig. 3. In Fig. 3, a target roasting temperature is indicated by a dashed-dotted line as a target temperature T0, the surface temperature of the raw cacao beans is indicated by a solid line as a roasting temperature T1, and the internal temperature of the raw cacao beans is indicated by a dashed-two dotted line as a roasting temperature T2.

### (Example 3)

Raw cacao beans were roasted in the same manner as in Example 1 described above, except that the roasting time was set to 10 minutes.

### (Example 4)

Raw cacao beans were roasted in the same manner as in Example 1 described above, except that the roasting temperature was set to 90°C.

### (Example 5)

Raw cacao beans were roasted in the same manner as in Example 4 described above, except that the roasting time was set to 5 minutes.

### (Example 6)

Raw cacao beans were roasted in the same manner as in Example 1 described above, except that the roasting temperature was set to 50°C.

### (Example 7)

Raw cacao beans were roasted in the same manner as in Example 6 described above, except that the roasting time was set to 5 minutes.

### (Example 8)

Raw cacao beans were roasted in the same manner as in Example 6 described above, except that the roasting time was set to 10 minutes.

### (Example 9)

Raw cacao beans were roasted in the same manner as in Example 1 described above, except that the roasting temperature was set to 60°C.

### (Example 10)

Raw cacao beans were roasted in the same manner as in Example 9 described above, except that the roasting time was set to 5 minutes.

### (Example 11)

Raw cacao beans were roasted in the same manner as in Example 9 described above, except that the roasting time was set to 10 minutes.

### (Example 12)

Raw cacao beans were roasted in the same manner as in Example 1 described above, except that the roasting temperature was set to 70°C.

### (Example 13)

Raw cacao beans were roasted in the same manner as in Example 12 described above, except that the roasting time was set to 5 minutes.

### (Example 14)

Raw cacao beans were roasted in the same manner as in Example 12 described above, except that the roasting time was set to 10 minutes.

### (Reference Example 1)

Raw cacao beans were roasted in the same manner as in Example 1 described above, except that the roasting temperature was set to 100°C.

### (Reference Example 2)

Raw cacao beans were roasted in the same manner as in Reference Example 1 described above, except that the roasting time was set to 5 minutes.

### (Reference Example 3)

Raw cacao beans were roasted in the same manner as in Example 1 described above, except that the roasting temperature was set to 120°C and the roasting time was set to 1 minute.

### (Reference Example 4)

Raw cacao beans were roasted in the same manner as in Example 1 described above, except that the roasting temperature was set to 40°C.

### (Reference Example 5)

Raw cacao beans were roasted in the same manner as in Reference Example 4 described above, except that the roasting time was set to 5 minutes.

### (Reference Example 6)

Raw cacao beans were roasted in the same manner as in Reference Example 4 described above, except that the roasting time was set to 10 minutes.

### (Reference Example 7)

Raw cacao beans were roasted in the same manner as in Example 1 described above, except that roasting was performed at a normal pressure (□ 101 kPa).

### (Comparative Example 1)

Raw cacao beans were roasted in the same manner as in Example 1 described above, except that heat transfer heating was used instead of microwave heating. The heat transfer heating was performed by heating a container with a ceramic heater from the outside.

### (Comparative Example 2)

Raw cacao beans were roasted in the same manner as in Comparative Example 1 described above, except that the roasting temperature was set to 150°C, the roasting time was set to 40 minute, and roasting was performed at a normal pressure.

### 2. Evaluation

### 2-1. Roasting state and taste

For each of Examples, Reference Examples, and Comparative Examples using microwave heating in roasting, the roasting state and taste of the cacao beans after roasting were evaluated according to the following evaluation criteria.

### • Evaluation criteria

A: The roasting state and taste are both very good.
B: The roasting state and taste are inferior to A but are both good.
C: The roasting state and taste are inferior to B but are both not problematic.
D: Roasting is not performed or the beans are carbonized.

The roasting state was evaluated by crushing and breaking beans with a hand and then visually observing the contact state between the hull and the nib, and the like. The taste was evaluated for bitterness, unpleasant taste, or the like by majority vote of ten monitors. The evaluation results of the roasting state and taste are presented in Table 1. Note that, in Table 1, "MW" indicates microwave heating, and "CH" indicates heat transfer heating with a ceramic heater.

**[Table 1]**

| | | Roasting conditions | | | | Evaluation | | | |
|---|---|---|---|---|---|---|---|---|---|
| | | Heating method | Temperature [°C] | Time [min] | Pressure [kPa] | Water Content [mass%] | Total polyphenol | | Roasting state/ taste |
| | | | | | | | Content [mass%] ^{∗}Beans from which water has been removed | Difference (A - B) with raw cacao beans [mass%] | |
| Raw cacao beans | | - | - | - | - | 7.10 | 3.71 | - | - |
| Roasted cacao beans | Example 1 | MW | 80 | 7.5 | 25-30 | 5.08 | 3.72 | -0.01 | A |
| | Example 2 | MW | 80 | 5 | 25-30 | - | - | - | A |
| | Example 3 | MW | 80 | 10 | 25-30 | - | - | - | C |
| | Example 4 | MW | 90 | 7.5 | 25-30 | 5.33 | 3.44 | 0.27 | B |
| | Example 5 | MW | 90 | 5 | 25-30 | - | - | - | A |
| | Example 6 | MW | 50 | 7.5 | 25-30 | - | - | - | B |
| | Example 7 | MW | 50 | 5 | 25-30 | - | - | - | B |
| | Example 8 | MW | 50 | 10 | 25-30 | - | - | - | B |
| | Example 9 | MW | 60 | 7.5 | 25-30 | - | - | - | B |
| | Example 10 | MW | 60 | 5 | 25-30 | - | - | - | B |
| | Example 11 | MW | 60 | 10 | 25-30 | - | - | - | B |
| | Example 12 | MW | 70 | 7.5 | 25-30 | - | - | - | A |
| | Example 13 | MW | 70 | 5 | 25-30 | - | - | - | A |
| | Example 14 | MW | 70 | 10 | 25-30 | - | - | - | B |
| | Reference Example 1 | MW | 100 | 7.5 | 25-30 | 2.83 | 3.40 | 0.31 | D |
| | Reference Example 2 | MW | 100 | 5 | 25-30 | - | - | - | D |
| | Reference Example 3 | MW | 120 | 1 | 25-30 | - | - | - | D |
| | Reference Example 4 | MW | 40 | 7.5 | 25-30 | - | - | - | D |
| | Reference Example 5 | MW | 40 | 5 | 25-30 | - | - | - | D |
| | Reference Example 6 | MW | 40 | 10 | 25-30 | - | - | - | D |
| | Reference Example 7 | MW | 80 | 7.5 | 101 | - | - | - | D |
| | Comparative Example 1 | CH | 80 | 7.5 | 25-30 | 6.07 | 3.44 | 0.27 | D |
| | Comparative Example 2 | CH | 150 | 40 | 101 | 2.80 | 2.49 | 1.22 | D |

### 2-2. Measurement of total polyphenol content

The total polyphenol content of each of Examples 1 and 4, Reference Example 2, and Comparative Examples 1 and 2 described above was measured. This measurement was performed in accordance with a Folin Ciocalteu method. The measurement results of the total polyphenol content are presented in Table 1. Here, the total polyphenol content in Table 1 refers to an amount obtained by subtracting the water amount in the raw cacao beans. Also regarding other Examples, it is confirmed by means of other experiments that the total polyphenol content is similar.

From the above results, it is found that the total polyphenol content is larger in the roasted cacao beans of each Example than in the roasted cacao beans in each Reference Example and each Comparative Example, and bitterness and the like are reduced in each Example. On the other hand, in Comparative Example 1, the total polyphenol content was comparable with each Example, but roasting was insufficient. In Comparative Example 2, the beans are roasted, but the total polyphenol content is significantly lower than that of each Example.

### DESCRIPTION OF REFERENCE SIGNS

B: Cacao bean
MW: Microwave

## Claims

1. Roasted cacao beans being obtained by roasting raw cacao beans by heating for a predetermined time with microwaves in a state where a pressure has been reduced below a normal pressure such that a surface temperature thereof is in a range of 50°C to 90°C.

2. The roasted cacao beans according to claim 1, wherein a total polyphenol content measured in accordance with a Folin Ciocalteu method is 3.0 mass% or more.

3. The roasted cacao beans according to claim 1 or 2, wherein a water content is within a range of 3.0 mass% to 6.0 mass%.

4. A method for roasting raw cacao beans, the method comprising
roasting raw cacao beans by heating for a predetermined time with microwaves in a state where a pressure has been reduced below a normal pressure such that a surface temperature thereof is in a range of 50°C to 90°C.

5. The method for roasting raw cacao beans according to claim 4, wherein a heating time for heating with the microwaves is within a range of 5 minutes to 10 minutes.

6. The method for roasting raw cacao beans according to claim 4 or 5, wherein the pressure is within a range of 1 kPa to 50 kPa.

7. The method for roasting raw cacao beans according to any one of claims 4 to 6, wherein,
when a total polyphenol content in the raw cacao beans is designated as A [mass%] and a total polyphenol content in roasted cacao beans is designated as B [mass%],
(A - B) is 0.5 mass% or less.

8. The method for roasting raw cacao beans according to any one of claims 4 to 7, wherein, when a total polyphenol content in the roasted cacao beans is measured in accordance with a Folin Ciocalteu method, the total polyphenol content is 3.0 mass% or more.

9. The method for roasting raw cacao beans according to any one of claims 4 to 8, wherein a water content in the roasted cacao beans is within a range of 3.0 mass% to 6.0 mass%.
